# EUROPÄISCHE PATENTSCHRIFT

(11) **EP 3 940 226 B1**
(45) Veröffentlichungstag und Bekanntmachung des Hinweises auf die Patenterteilung: **01.05.2024**
(21) Anmeldenummer: 21183320.7
(22) Anmeldetag: 02.07.2021
(51) Int. Cl.: F03D 7/02

(54) **WINDENERGIEANLAGE UND VERFAHREN ZUM BETREIBEN EINER WINDENERGIEANLAGE**
WIND ENERGY SYSTEM AND METHOD FOR OPERATING A WIND ENERGY SYSTEM
ÉOLIENNE ET PROCÉDÉ DE FONCTIONNEMENT D'UNE ÉOLIENNE

(30) Priorität: 03.07.2020 DE 102020004035; 03.07.2020 DE 102020004034; 03.07.2020 DE 102020004036
(43) Veröffentlichungstag der Anmeldung: 19.01.2022
(73) Patentinhaber: Siemens Gamesa Renewable Energy Service GmbH, 20097 Hamburg (DE)
(72) Erfinder: HÖR, Oliver, 24796 Bredenbek (DE); BEHL, Stefan, 24536 Neumünster (DE); WARFEN, Karsten, 23795 Weede/Söhren (DE)
(74) Vertreter: Schlotter, Alexander Carolus Paul

(56) Entgegenhaltungen:
- DE-A1-102004 024 563
- DE-A1-102007 052 863
- DE-A1-102011 079 269

## Beschreibung

Die vorliegende Erfindung betrifft eine Windenergieanlage, ein Verfahren zum Betreiben einer Windenergieanlage sowie ein Computerprogrammprodukt zur Durchführung des Verfahrens.

Aus betriebsinterner Praxis sind Windenergieanlagen mit winkelverstellbaren Rotorblättern bekannt.

Indem die Rotorblätter in eine Fahnenstellung verstellt werden, in der sie, wenigstens im Wesentlichen, keine Leistung an eine Rotor-Drehachse bzw. -nabe erzeugen, kann insbesondere eine Leistung der Windenergieanlage geregelt und/oder eine Belastung bei (zu) starkem Wind reduziert werden.

Aus betriebsinterner Praxis ist es bekannt, in einem Störfall die Rotorblätter in die Fahnenstellung zu drehen und dort mittels Pitch-Bremsen festzuhalten. Im Falle eines Netzausfalls verbleiben die Blätter in dieser Fahnenstellung, bis durch Wiederkehr des elektrischen Netzes der normale Verstellbetrieb reaktiviert wird.

Die DE 10 2007 052863A1 betrifft ein Verfahren zum Betreiben einer Windenergieanlage, wobei die Windenergieanlage einen Rotor mit einer Rotorachse und wenigstens ein am Rotor angeordnetes Rotorblatt aufweist, wobei das Rotorblatt um eine Rotorblattachse mit einem vorbestimmten Rotorblattverstellwinkel einstellbar ist oder eingestellt wird, wobei das Verfahren dadurch weitergebildet wird, dass das wenigstens eine Rotorblatt in eine Ruheposition gedreht wird, nach Erreichen einer ersten vorbestimmten Drehposition des Rotorblatts die Drehung des Rotorblatts gebremst wird und die in Folge des Bremsvorgangs erreichte Stillstandsposition des Rotorblatts erfasst wird.

Die DE 10 2011 079269 A1 betrifft eine Blattverstellvorrichtung für ein Rotorblatt eines Rotors einer Windturbine, wobei die Blattverstellvorrichtung einen Verstellmotor zum Antreiben und/oder Festsetzen des Rotorblatts, einen Umrichter zum Ansteuern des Verstellmotors, eine Batterie zur Notversorgung der Blattverstellvorrichtung und eine Steuereinheit zum Ansteuern des Umrichters umfasst, wobei in der Steuereinheit eine interne Sicherheitskette zum Überwachen der Funktionen und/oder Komponenten der Blattverstellvorrichtung integriert ist und die Blattverstellvorrichtungen der Rotorblätter mit einer Anlagensicherheitskette verbunden sind und durch Ansteuern eines Schalters die Anlagensicherheitskette öffnen und schließen können, wobei bei Erfassen eines Fehlers in einer der Blattverstellvorrichtungen die jeweilige Steuereinheit die Anlagensicherheitskette öffnen kann, wobei durch Öffnen der Sicherheitskette ein Signal an die Blattverstellvorrichtungen geschickt wird, so dass alle Blattverstellvorrichtungen bei Erhalten des Signals eine im Wesentlichen synchrone Sicherheitsfahrt von mindestens zwei Rotorblätter einleiten.

Aufgabe der vorliegenden Erfindung ist es, den Betrieb einer Windenergieanlage zu verbessern.

Diese Aufgabe wird durch ein Verfahren mit den Merkmalen des Anspruchs 1 gelöst. Ansprüche 13, 15 stellen eine Windenergieanlage bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Windenergieanlage einen Rotor mit wenigstens einem winkelverstellbaren Rotorblatt und einen Verstellantrieb auf, mithilfe dessen, insbesondere durch den, dieses Rotorblatt (winkel)verstellbar ist bzw. (winkel)verstellt wird bzw. der hierzu vorgesehen, insbesondere eingerichtet ist bzw. verwendet wird.

Der Rotor ist in einer Ausführung an einer Gondel der Windenergieanlage um eine, insbesondere horizontale, Rotor-Drehachse drehbar gelagert und in einer Ausführung mit einem Generator zur Umsetzung einer Rotordrehung bzw. -leistung in elektrische Energie, insbesondere zum Einspeisen in ein (Energieversorgungs- bzw. Strom)Netz, gekoppelt. Die Gondel ist in einer Ausführung an einem Turm angeordnet und in einer Ausführung durch einen Gondelantrieb um eine vertikale Gondel-Drehachse drehbar. In einer Ausführung weist der Rotor mehrere, in einer Ausführung drei, winkelverstellbaren Rotorblätter auf, die in einer Ausführung längs eines Umfangs des Rotors verteilt (angeordnet) sind.

Für solche Windenergieanlagen ist die vorliegende Erfindung, insbesondere aufgrund der dabei auftretenden Lasten und Betriebsbedingungen, besonders geeignet, ohne hierauf beschränkt zu sein.

In einer Ausführung sind ein oder mehrere, insbesondere alle, Rotorblätter des Rotors (jeweils) durch einen eigenen Verstellantrieb (winkel)verstellbar.

Hierdurch kann in einer Ausführung die Blattstellung individuell angepasst und dadurch die Sicherheit erhöht und/oder die Leistungsregelung der Windenergieanlage verbessert werden.

Unter einer (Winkel)Verstellung eines Rotorblatts wird vorliegend insbesondere eine Verdrehung des Rotorblatts um eine Rotorblatt-Drehachse verstanden, welche sich in Längsrichtung des Rotorblatts und/oder quer zur Rotor-Drehachse erstreckt. Sofern vorliegend von einem Verstellen bzw. einer Stellung gesprochen wird, kann dies (jeweils) ein Verdrehen bzw. eine Winkelstellung bzw. -lage um die Rotorblatt-Drehachse sein.

Nach einer Ausführung der vorliegenden Erfindung wird bzw. werden bei, insbesondere infolge eines, (Erfassen(s) eines) Auftritt(s) wenigstens eines Sonderbetriebsfalls, in einer Ausführung wenigstens eines Störfalls, das Rotorblatt bzw. eines oder mehrere, vorzugsweise alle, Rotorblätter (jeweils) mithilfe des, in einer Ausführung eigenen, Verstellantriebs in Richtung einer, in einer Ausführung, insbesondere vorab und/oder fest, vorgegebenen, Abschaltstellung verstellt, in einer Ausführung (bis) in die Abschaltstellung verstellt.

Diese Abschaltstellung ist in einer Ausführung eine Fahnenstellung, in der das (jeweilige) Rotorblatt, wenigstens im Wesentlichen, keine Leistung an der Rotor-Drehachse bzw. -nabe erzeugt.

Hierdurch kann in einer Ausführung eine dynamische Belastung der Windenergieanlage besonders vorteilhaft reduziert werden.

In einer anderen Ausführung ist diese Abschaltstellung eine Trudelstellung, in der eine von dem (jeweiligen) Rotorblatt erzeugte Leistung an der Rotor-Drehachse bzw. -nabe höchstens 10%, insbesondere höchstens 5%, insbesondere höchstens 1%, einer von dem Rotorblatt bei gleichen Windbedingungen maximal erzeugbaren Leistung an der Rotor-Drehachse bzw. -nabe beträgt und/oder die von der Fahnenstellung um höchstens 20°, in einer Ausführung höchstens 15°, abweicht.

Hierdurch kann in einer Ausführung eine geringfügige Drehung des Rotors um die Rotor-Drehachse bewirkt und dadurch insbesondere eine inhomogene statische Belastung der Windenergieanlage vorteilhaft reduziert und/oder eine Schmierung verbessert werden.

Nach einer Ausführung der vorliegenden Erfindung weist die Windenergieanlage einen Energiespeicher auf, um das wenigstens eine Rotorblatt bei Auftritt des Sonderbetriebs-, insbesondere Störfalls mithilfe seines Verstellantriebs in Richtung der Abschaltstellung zu verstellen, insbesondere den Verstellantrieb hierzu mit (Antriebs)Energie zu versorgen. In einer Ausführung ist der Energiespeicher ein interner bzw. netzexterner Energiespeicher, in einer Ausführung in der Windenergieanlage, insbesondere im Rotor oder in der Gondel angeordnet. Unter einem Netz wird vorliegend insbesondere ein Stromnetz bzw. Netzwerk zur Übertragung und Verteilung elektrischer Energie zwischen mehreren Gebäuden verstanden. In einer Ausführung wird bzw. werden bei, insbesondere infolge eines, (Erfassen(s) eines) Auftritt(s) wenigstens eines Sonderbetriebsfalls, in einer Ausführung wenigstens eines Störfalls, das Rotorblatt bzw. eines oder mehrere, vorzugsweise alle, Rotorblätter (jeweils) mithilfe des, in einer Ausführung eigenen, Verstellantriebs in Richtung einer, in einer Ausführung, insbesondere vorab und/oder fest, vorgegebenen, Abschaltstellung verstellt, in einer Ausführung (bis) in die Abschaltstellung verstellt, wobei der bzw. einer oder mehrere der Verstellantrieb(e) dabei bzw. hierzu durch den bzw. die Energiespeicher mit Energies versorgt werden.

Hierdurch kann in einer Ausführung zuverlässig(er), insbesondere auch bei einem Netzausfall, die Abschaltstellung angefahren werden.

Nach einer Ausführung der vorliegenden Erfindung ist in der Abschaltstellung eine Energieversorgung des Verstellantriebs aus dem Energiespeicher, mit deren Hilfe das Rotorblatt bei Auftritt des Sonderbetriebs-, insbesondere Störfalls in Richtung der Abschaltstellung verstellt worden ist, abgeschaltet. In einer Ausführung wird diese Energieversorgung, in einer Ausführung bei Erreichen der Abschaltstellung, abgeschaltet.

Hierdurch kann in einer Ausführung die Sicherheit erhöht, insbesondere ein ungewolltes Aktuieren des Verstellantriebs über die Abschaltstellung hinaus vermieden werden.

In einer Ausführung weisen zwei oder mehre der Verstellantriebe einen gemeinsamen Energiespeicher zum Verstellen der Rotorblätter in Richtung ihrer Abschaltstellungen bei Auftritt des Sonderbetriebsfalls auf, wobei dann in einer Ausführung in der Abschaltstellung des jeweiligen Rotorblatts die Energieversorgung von dessen Verstellantrieb aus diesem gemeinsamen Energiespeicher abgeschaltet ist, insbesondere, in einer Ausführung bei Erreichen der jeweiligen Abschaltstellung, abgeschaltet wird.

Hierdurch kann in einer Ausführung die Windenergieanlage kompakter bauen.

In einer Ausführung weisen zwei oder mehre der Verstellantriebe jeweils einen eigenen Energiespeicher zum Verstellen des jeweiligen Rotorblatts in Richtung seiner Abschaltstellungen bei Auftritt des Sonderbetriebsfalls auf, wobei dann in einer Ausführung in der Abschaltstellung des jeweiligen Rotorblatts die Energieversorgung von dessen Verstellantrieb aus seinem eigenen Energiespeicher abgeschaltet ist, insbesondere, in einer Ausführung bei Erreichen der Abschaltstellung, abgeschaltet wird.

Hierdurch kann in einer Ausführung die Sicherheit erhöht werden.

Zusätzlich oder alternativ zu diesem Abschalten der Energieversorgung aus dem Energiespeicher ist nach einer Ausführung der vorliegenden Erfindung in der Abschaltstellung eine Pitch-Bremse der Windenergieanlage geschlossen, die das Rotorblatt in seiner aktuellen Stellung zu halten sucht, insbesondere hält, bzw. hierzu vorgesehen, insbesondere eingerichtet ist bzw. verwendet wird.

Hierdurch kann in einer Ausführung die Sicherheit erhöht werden.

In einer Ausführung wird die Pitch-Bremse bei bzw. nach Erreichen der Abschaltstellung geschlossen.

Hierdurch kann in einer Ausführung ein Verschleiß und/oder ein Energieverbrauch reduziert werden.

In einer Ausführung weisen zwei oder mehre der Rotorblätter jeweils eine eigene Pitch-Bremse zum Halten des jeweiligen Rotorblatts in seiner aktuellen Stellungen auf, wobei dann in einer Ausführung in der Abschaltstellung des jeweiligen Rotorblatts seine Pitch-Bremse geschlossen ist, in einer Ausführung bei bzw. nach Erreichen der Abschaltstellung geschlossen wird.

Hierdurch kann in einer Ausführung die Sicherheit erhöht werden.

Nach einer Ausführung der vorliegenden Erfindung wird auf Basis wenigstens eines Aktivierungssignals das Rotorblatt mithilfe des Verstellantriebs in einem Verstellbetriebsmodus (winkel) verstellt, während der Sonderbetriebsfall noch andauert.

Einer Ausführung der vorliegenden Erfindung liegt die Idee zugrunde, nach dem Anfahren der Abschaltstellung trotz weiter andauerndem Sonderbetriebsfall vorteilhaft zu reagieren, insbesondere auf Bedingungen bzw. Geschehnisse, die während des (noch andauernden) Sonderbetriebsfalls eintreten.

So kann es insbesondere wünschenswert sein, das bzw. die Rotorblätter auch bei noch andauerndem Sonderbetriebsfall aus der angefahrenen Abschaltstellung weiter zu verstellen:
Ist beispielsweise die Abschaltstellung keine Fahnen-, sondern zum Beispiel (nur) eine Trudelstellung, kann dies eine Wartung durch ein Wartungspersonal stören. Hierfür kann es günstig sein, das bzw. die Rotorblätter mithilfe des bzw. der Antriebe in eine Fahnenstellung (weiter)verstellen zu können, während der Sonderbetriebsfall noch andauert.

Gleichermaßen kann es zum Beispiel wünschenswert sein, auch während des Sonderbetriebsfalls beispielsweise von einer Trudel- in eine Fahnenstellung zu verstellen, insbesondere, um bei zunehmendem Wind eine Drehzahl und/oder Last des Rotors zu reduzieren.

Falls die Pitch-Bremse während des Sonderbetriebsfalls (durch)rutscht, kann in einer Ausführung hierauf vorteilhaft durch Rückstellen mithilfe des (jeweiligen) Verstellantriebs reagiert werden.

In einer Ausführung wird auf Basis, insbesondere infolge, wenigstens eines reaktivierenden Aktivierungssignals die Energieversorgung des Verstellantriebs bzw. eines oder mehrerer der Verstellantriebe aus dem (jeweiligen, insbesondere gemeinsamen bzw. eigenen) Energiespeicher zum Verstellen des Rotorblatts wieder zugeschaltet und das (jeweilige) Rotorblatt mithilfe dieser (wieder zugeschalteten) Energieversorgung des (jeweilige) Verstellantriebs in einem Reaktivierungs-Verstellbetriebsmodus verstellt, während der Sonderbetriebsfall noch andauert.

Dies stellt eine bewusste Abkehr von einem bisherigen Sicherheitskonzept dar, nach dem nach Anfahren der Abschaltstellung die Energieversorgung durch den bzw. die Energiespeicher abgeschaltet wird und bleibt, um ein unbeabsichtigtes Verstellen durch die Verstellantriebe während des Sonderbetriebsfalls zu verhindern und nur eine Wiederinbetriebnahme nach Beendigung des Sonderbetriebsfalls vorgesehen ist, bei der die Verstellantriebe nicht mehr durch den bzw. die Energiespeicher, sondern (wieder regulär) durch eine externe Energiequelle wie ein (Strom)Netz, ein(e) Hydraulikquelle oder dergleichen versorgt werden.

In einer Ausführung ist, insbesondere wird, ein reaktivierendes Aktivierungssignal durch manuelle Eingabe über wenigstens eine Schnittstelle auslösbar, insbesondere ausgelöst.

Hierdurch kann in einer Ausführung ein Wartungspersonal während des noch andauernden Sonderbetriebsfalls das bzw. die Rotorblätter mithilfe des jeweiligen Verstellantriebs und Energiespeichers von der Abschalt- in eine Fahnenstellung verstellen. Dies kann besonders dann vorteilhaft sein, wenn der Rotor in einer Ausführung nach einem Störfall, insbesondere bei anhaltendem Netzausfall, in der Abschaltstellung trudelt. Soll dieser Rotor vom Wartungspersonal begangen werden, ist zuvor das Einlegen und gegebenenfalls Verbolzen einer Rotorarretierung bei positioniertem Rotor im Stillstand erforderlich. Diese Stillsetzung und/oder Positionierung des Rotors kann in einer Ausführung durch die oben beschriebe Verstellung von der Abschaltstellung in die Fahnenstellung erfolgen, ohne dass eine Netzrückkehr abgewartet werden muss. Allgemein wird in einer Ausführung nach dem Verstellen des bzw. der Rotorblätter mithilfe des jeweiligen Verstellantriebs und Energiespeichers in eine bzw. die Fahnenstellung in einem bzw. dem Reaktivierungs-Verstellbetriebsmodus der Rotor, in einer Ausführung während der Sonderbetriebs-, insbesondere Störfall noch andauert, arretiert, in einer Ausführung eine Rotorarretierung eingelegt und in einer Weiterbildung verbolzt, bevor anschließend Wartungspersonal den stillstehenden Rotor begehen darf, in einer Ausführung begeht.

In einer Ausführung ist die wenigstens eine Schnittstelle am Rotor angeordnet, insbesondere von der Gondel aus sicht- und/oder, insbesondere manuell, erreichbar.

Dadurch kann in einer Ausführung die Sicherheit erhöht, insbesondere das reaktivierende Aktivierungssignal direkt vor Ort, vorzugsweise mit Sichtkontakt, ausgelöst werden.

In einer Ausführung ist die manuelle Auslösung über zwei oder mehr Schnittstellen möglich, die in einer Ausführung am Rotor angeordnet, insbesondere längs eines Umfangs des Rotors verteilt, in einer Ausführung auf einander gegenüberliegenden Seiten des Rotors angeordnet sind.

Dadurch kann in einer Ausführung die Sicherheit erhöht, insbesondere das reaktivierende Aktivierungssignal bei verschiedenen Rotordrehlagen ausgelöst werden.

In einer Ausführung erfordert die manuelle Auslösung des reaktivierenden Aktivierungssignal wenigstens zwei, in einer Ausführung sequentielle, in einer Ausführung zeitlich voneinander beabstandete, manuelle Eingaben. In einer Ausführung wird durch eine manuelle Eingabe an der bzw. wenigstens einer der Schnittstelle(n) zunächst, in einer Ausführung für eine vorgegebene Zeit, in einen Bereitschaftsmodus gewechselt und dieser in einer Ausführung signalisiert, in einer Ausführung an der bzw. den, insbesondere durch die, Schnittstelle(n), und erst bei einer weiteren manuellen Eingabe während des Bereitschaftsmodus dann die Energieversorgung aus dem bzw. den Energiespeicher(n) zum Verstellen des bzw. der Rotorblätter wieder zugeschaltet und in einer Ausführung auch dieses Verstellen initiiert. Eine Schnittstelle weist in einer Ausführung einen hard- oder softwaretechnisch ausgebildeten Taster auf.

Dadurch kann in einer Ausführung die Sicherheit erhöht, insbesondere die Wahrscheinlichkeit eines unbeabsichtigten Verstellens reduziert werden.

Zusätzlich oder alternativ zu einer manuellen Eingabe wird in einer Ausführung ein reaktivierendes Aktivierungssignal ausgelöst, falls erfasst wird, dass eine Drehzahl oder Last des Rotors, insbesondere eine Last des Rotorblattes, einen vorgegebenen Grenzwert, insbesondere eine vorgegebenen Höchstdrehzahl bzw. -last, überschreitet.

Dadurch kann in einer Ausführung die Sicherheit erhöht, in einer Ausführung bei stärkerem Wind selbsttätig eine Fahnenstellung angefahren werden.

In einer Ausführung ist, insbesondere wird, die Pitch-Bremse (des bzw. der jeweiligen Rotorblätter) während des Reaktivierungs-Verstellbetriebsmodus bzw. dem Verstellen des (jeweiligen) Rotorblatts, das mithilfe der Energieversorgung aus dem bzw. den Energiespeicher(n) erfolgt, wenigstens zeitweise geöffnet und in einer Ausführung nach dem Verstellen in dem Reaktivierungs-Verstellbetriebsmodus geschlossen.

Hierdurch kann in einer Ausführung ein Verschleiß und/oder ein Energieverbrauch reduziert werden.

Gleichermaßen kann die Pitch-Bremse (des bzw. der jeweiligen Rotorblätter) während des Reaktivierungs-Verstellbetriebsmodus bzw. dem Verstellen des (jeweiligen) Rotorblatts, das mithilfe der Energieversorgung aus dem bzw. den Energiespeicher(n) erfolgt, auch geschlossen sein, insbesondere bleiben.

Dadurch kann in einer Ausführung die Sicherheit erhöht werden.

In einer Ausführung werden das bzw. eines oder mehrere der Rotorblätter in dem Reaktivierungs-Verstellbetriebsmodus (jeweils) in eine vorgegebene Sollstellung oder um einen vorgegebenen Betrag, insbesondere in eine vorgegebene Richtung, verstellt.

Dadurch kann in einer Ausführung, wie bereits erläutert, bei Bedarf aus der Abschalt- in die Fahnenstellung verfahren werden.

In einer Ausführung wird ein abweichungsabhängiges Aktivierungssignal ausgelöst, falls, insbesondere bei bzw. trotz (weiterhin) geschlossener Pitch-Bremse, eine Abweichung (der Winkelstellung) des (jeweiligen) Rotorblatts von (s)einer Sollstellung einen vorgegebenen Grenzwert überschreitet bzw. dies erfasst wird, und auf Basis, insbesondere infolge, des abweichungsabhängigen Aktivierungssignals das Rotorblatt in einem Bremsunterstützungs-Verstellbetriebsmodus verstellt, während der Sonderbetriebsfall noch andauert, wobei das Rotorblatt in dem Bremsunterstützungs-Verstellbetriebsmodus in Richtung der Sollstellung verstellt, in einer Ausführung die Sollstellung angefahren wird bzw. der Verstellantrieb dies versucht.

In einer Ausführung ist diese Sollstellung die Abschaltstellung. Zusätzlich oder alternativ wird die Abweichung (der Winkelstellung) des (jeweiligen) Rotorblatts von (s)einer Sollstellung durch einen oder vorzugsweise wenigstens zwei Sensoren erfasst.

Dadurch kann in einer Ausführung bei einem Wegrutschen eines Rotorblatts von einer angefahrenen Fahnenstellung das Rotorblatt mithilfe des Verstellantriebs und Energiespeichers in die Fahnenstellung zurückgeholt werden, obwohl der Sonderbetriebsfall noch andauert. Hierdurch kann in einer Ausführung die Sicherheit erhöht werden. Dabei können durch wenigstens zwei, insbesondere redundante, Sensoren die Winkelstellung bzw. Abweichung zuverlässig(er) erfasst und dadurch die Sicherheit weiter erhöht werden.

In einer anderen Ausführung ist die Sollstellung eine von der Abschaltstellung verschieden(e) vorgegebene Sollstellung, insbesondere kann die Sollstellung die Fahnenstellung und die Abschaltstellung entsprechend eine hiervon verschiedene Stellung, insbesondere eine Trudelstellung sein.

Dadurch kann in einer Ausführung zunächst die Abschaltstellung angefahren und durch den Bremsunterstützungs-Verstellbetriebsmodus jedenfalls das Halten (in) der Fahnenstellung gewährleistet werden. Hierdurch kann in einer Ausführung die Sicherheit erhöht und eine inhomogene statische Belastung der Windenergieanlage reduziert und/oder eine Schmierung verbessert werden.

In einer Ausführung fährt das Rotorblatt in dem Bremsunterstützungs-Verstellbetriebsmodus die Sollstellung auf dem kürzeren von wenigstens zwei möglichen Verstellwegen an bzw. wird sein Verstellantrieb entsprechend gesteuert. Bezeichnet beispielsweise 90° die Sollstellung und wird eine Winkelstellung des Rotorblatts von 95°, d.h. eine Abweichung von +5°, erfasst, wird das Rotorblatt in negativer Richtung verstellt. Wird umgekehrt eine Winkelstellung des Rotorblatts von 85°, d.h. eine Abweichung von -5°, erfasst, wird das Rotorblatt in positiver Richtung verstellt. Dies stellt jeweils den kürzeren Weg gegenüber einer Verstellung von 95° in positiver Richtung (95° -> 360°=0° -> 90°) bzw. von 85° in negativer Richtung (85° → 0° =360°→ 90°) dar.

Dadurch kann insbesondere ein Durchgang des Rotorblatts durch besonders ungünstige Anströmverhältnisse beim (Wieder)Anfahren der Sollstellung mithilfe des Verstellantriebs vermieden und dadurch eine Belastung der Windenergieanlage reduziert bzw. eine Sicherheit erhöht werden.

In einer Ausführung ist, insbesondere wird, die Pitch-Bremse (des bzw. der jeweiligen Rotorblätter) während des Bremsunterstützungs-Verstellbetriebsmodus bzw. dem Anfahren der Sollstellung wenigstens zeitweise geöffnet und in einer Ausführung nach dem Verstellen in dem Bremsunterstützungs-Verstellbetriebsmodus geschlossen.

Hierdurch kann in einer Ausführung ein Verschleiß und/oder ein Energieverbrauch reduziert werden.

Gleichermaßen kann die Pitch-Bremse (des bzw. der jeweiligen Rotorblätter) während des Bremsunterstützungs-Verstellbetriebsmodus bzw. dem Anfahren der Sollstellung auch geschlossen sein, insbesondere bleiben.

Dadurch kann in einer Ausführung die Sicherheit erhöht werden.

In einer Ausführung wird auf Basis des abweichungsabhängigen Aktivierungssignals die Energieversorgung des Verstellantriebs bzw. eines oder mehrerer der Verstellantriebe aus dem (jeweiligen, insbesondere gemeinsamen bzw. eigenen) Energiespeicher zum Verstellen des Rotorblatts wieder zugeschaltet und das (jeweilige) Rotorblatt mithilfe dieser (wieder zugeschalteten) Energieversorgung des (jeweilige) Verstellantriebs in dem Bremsunterstützungs-Verstellbetriebsmodus verstellt, während der Sonderbetriebsfall noch andauert.

Dadurch kann in einer Ausführung die Sicherheit erhöht, insbesondere die Sollstellung zuverlässig(er) angefahren werden.

In einer Ausführung umfasst der Sonderbetriebs- bzw. Störfall einen Netzausfall bzw. Ausfall eines (Energie- bzw. Strom)Netzes, in das die Windenergieanlage wenigstens temporär, insbesondere elektrische, Energie einspeist und/oder aus dem der bzw. einer oder mehrere der Verstellantriebe wenigstens temporär, insbesondere in einem Normalbetriebsmodus bzw. ohne den Störfall, versorgt werden bzw. hierzu eingerichtet sind.

Wie an anderer Stelle erläutert, ist die vorliegende Erfindung besonders bei einem solchen Sonderbetriebs-, insbesondere Störfall vorteilhaft, ohne jedoch hierauf beschränkt zu sein. Insbesondere kann ein Sonderbetriebsfall im Sinne der vorliegenden Erfindung einen Betriebsfall bzw. -zustand umfassen bzw. sein, in dem die Abschalt- bzw. Sollstellung, insbesondere die Trudel- bzw. Fahnenstellung, angefahren und das Rotorblatt in dieser durch die Pitch-Bremse gehalten wird bzw. werden soll, um beispielsweise eine Belastung der Windenergieanlage bei Starkwind zu reduzieren, eine Wartung der Windenergieanlage durchzuführen oder eine Erzeugung elektrischer Energie durch die Windenergieanlage zu reduzieren, beispielsweise, um eine vorgegebene Netzeinspeisung zu realisieren oder dergleichen.

In einer Ausführung verstellt der (jeweilige) Verstellantrieb das (jeweilige) Rotorblatt elektromotorisch, weist insbesondere wenigstens einen Elektromotor, in einer Ausführung wenigstens einen Gleichstrommotor, auf, und der bzw. eine oder mehrere der Energiespeicher umfassen (jeweils) einen elektrischen Energiespeicher, insbesondere eine oder mehrere Primär- und/oder eine oder mehrere Sekundärbatterien bzw. wiederaufladbare Akkumulatoren und/oder einen oder mehrere Kondensatoren, insbesondere Super- bzw. Ultrakondensatoren (Super- bzw. Ultra-Caps).

Insbesondere da solche Verstellantriebe von einem Netzausfall besonders betroffen sind, ist die vorliegende Erfindung hierfür besonders vorteilhaft.

In einer Ausführung erfolgt die Energieversorgung des Verstellantriebs aus dem elektrischen Energiespeicher über wenigstens einen Umrichter, insbesondere wenigstens einen Zwischenkreis.

Hierdurch kann in einer Ausführung der Verstellantrieb in dem (jeweiligen) Verstellbetriebsmodus vorteilhaft, insbesondere durch eine Steuerung, gesteuert werden.

In einer Ausführung ist bzw. wird die Energieversorgung aus dem elektrischen Energiespeicher in der Abschaltstellung mithilfe wenigstens eines S(chalts)chütz abgeschaltet.

Dadurch kann in einer Ausführung die Sicherheit erhöht werden.

Entsprechend übersteuert bzw. schaltet in einer Ausführung eine bzw. die Steuerung diese(n) Schütz(e), um die Energieversorgung aus dem Energiespeicher in dem (jeweiligen) Verstellbetriebsmodus wieder zuzuschalten.

In einer Ausführung verstellt der (jeweilige) Verstellantrieb das (jeweilige) Rotorblatt hydraulisch, weist insbesondere wenigstens einen Hydraulikzylinder auf, und der bzw. eine oder mehrere der Energiespeicher umfassen (jeweils) einen ein- oder mehrkammerigen (Hydraulik)Druckspeicher bzw. Druckenergiespeicher, in einer Ausführung hydropneumatischen (Druck(energie))Speicher. Entsprechend wird auch (eine) Hydraulikdruck(versorgung) zum (Winkel)Verstellen eines Rotorblatts durch seinen hydraulischen Verstellantrieb als (Druck)Energie(versorgung) im Sinne der vorliegenden Erfindung bezeichnet bzw. unter Energie insbesondere Antriebsenergie für den Verstellantrieb, insbesondere also elektrische Energie für einen elektromotorischen Verstellantrieb bzw. Hydraulikdruck(energie) für einen hydraulischen Verstellantrieb verstanden. Mit anderen Worten kann das Wort "Energie" vorliegend in einer Ausführung durch "(Hydraulik)Druck" ersetzt werden.

Die vorliegende Erfindung kann auch bei solchen Verstellantrieben, insbesondere aufgrund von deren Aufbau und Wirkungsweise, besonders vorteilhaft verwendet werden.

In einer Ausführung ist bzw. wird die Energieversorgung aus dem Druckspeicher in der Abschaltstellung mithilfe wenigstens eines, insbesondere selbsttätigen, Ventils abgeschaltet, beispielsweise bei, insbesondere durch, Überfahren einer entsprechenden Hubstellung des Hydraulikzylinders.

Dadurch kann in einer Ausführung die Sicherheit erhöht werden.

Entsprechend übersteuert bzw. schaltet in einer Ausführung eine bzw. die Steuerung diese(s) Ventil(e), um die Energieversorgung aus dem Energiespeicher in dem (jeweiligen) Verstellbetriebsmodus wieder zuzuschalten.

Wie an anderer Stelle bereits erwähnt, basiert eine Ausführung der vorliegenden Erfindung auf einer Abkehr von bekannten Sicherheitskonzepten, bei denen während eines Sonderbetriebs-, insbesondere Störfalls nach Erreichen der Abschaltstellung(en) ein erneutes Verstellen durch den bzw. die Verstellantrieb(e) bewusst ausgeschlossen wird.

In einer Ausführung werden daher das bzw. die Rotorblätter mithilfe des (jeweiligen) Verstellantriebs in dem (jeweiligen) Verstellbetriebsmodus durch eine sichere, in einer Ausführung vollständig oder teilweise redundante, Steuerung verstellt. Diese ist in einer Ausführung vollständig oder teilweise diversitär und/oder weist wenigstens eine(n) SLC auf. In einer Ausführung handelt es sich bei der SLC um eine Sicherheitssteuerung gemäß IEC 61508/IEC61511 mit Sicherheits-Integritätslevel (SIL) SIL2 oder SIL3, welche in einer Ausführung in der Rotornabe der Windenergieanlage angeordnet ist.

Hierdurch kann in einer Ausführung die Sicherheit solcher bisher bekannter Sicherheitskonzepte mit den hier beschriebenen Vorteilen kombiniert werden.

Nach einer Ausführung der vorliegenden Erfindung ist eine bzw. die Windenergieanlage, insbesondere hard- und/oder softwaretechnisch, zur Durchführung eines hier beschriebenen Verfahrens eingerichtet und/oder weist auf:
- Mittel zum Verstellen des wenigstens einen Rotorblatts bei Auftritt wenigstens eines Sonderbetriebsfalls, in einer Ausführung wenigstens eines Störfalls, mithilfe des bzw. seines Verstellantriebs in Richtung einer Abschaltstellung, insbesondere zum Verstellen eines oder mehrerer der Rotorblätter bei Auftritt des Sonderbetriebs-, insbesondere Störfalls mithilfe des jeweiligen Verstellantriebs in Richtung der jeweiligen Abschaltstellung;
- Mittel zum
   - Abschalten einer Energieversorgung des Verstellantriebs bzw. eines oder mehrerer der Verstellantriebe aus einem, insbesondere eigenen oder gemeinsamen, Energiespeicher der Windenergieanlage zum Verstellen des (jeweiligen) Rotorblatts in Richtung der Abschaltstellung; und/oder zum
   - Schließen einer Pitch-Bremse der Windenergieanlage zum Halten des (jeweiligen) Rotorblatts in seiner aktuellen Stellung
   in der Abschaltstellung; und
- Mittel zum Verstellen des (jeweiligen) Rotorblatts mithilfe des (jeweiligen) Verstellantriebs in einem Verstellbetriebsmodus auf Basis wenigstens eines Aktivierungssignals, während der Sonderbetriebs-, insbesondere Störfall noch andauert.

In einer Ausführung rutscht die Pitch-Bremse planmäßig bei einer auf das Rotorblatt wirkenden Last, welche geringer als eine in der Abschaltstellung auf das Rotorblatt wirkenden Maximallast ist, für die die Windenergieanlage ausgelegt ist, in einer Ausführung ist die Pitch-Bremse entsprechend bzw. derart ausgelegt, insbesondere dimensioniert. Diese Last bzw. Maximallast umfasst in einer Ausführung ein (maximales Auslegungs)Drehmoment um die Rotorblatt-Drehachse.

Nach bisherigen Sicherheitskonzepten muss die Pitch-Bremse das Rotorblatt auch dann alleine und zuverlässig in einer angefahrenen Abschaltstellung, in einer Ausführung seiner Fahnenstellung, halten, wenn eine bei Auslegung der Windenergieanlage angenommene bzw. zugrunde gelegte bzw. erwartete Maximallast auf das Rotorblatt wirkt.

Demgegenüber wird in einer Ausführung der vorliegenden Erfindung ein Wegrutschen des durch die Pitch-Bremse in der Abschaltstellung gehaltenen Rotorblatts bei hoher Last, insbesondere wenigstens bei einer bei Auslegung der Windenergieanlage angenommenen Maximallast auf das Rotorblatt, bewusst in Kauf genommen und in diesem Fall durch Verstellen des Rotorblatts mithilfe seines Verstellantriebs, in einer Ausführung mittels Energieversorgung des Verstellantriebs aus dem Energiespeicher, begrenzt, vorzugsweise kompensiert.

Dies kann besonders dann sehr vorteilhaft sein, wenn der Verstellantrieb und/oder Energiespeicher, insbesondere aus Sicherheitsgründen, zum Verstellen des Rotorblatts in die Abschaltstellung auch bei geschlossener Pitch-Bremse ausgelegt sind, da in diesem Fall eine bewusst schwächere Auslegung der Pitch-Bremse eine entsprechend günstigere Auslegung von Verstellantrieb bzw. Energiespeicher ermöglicht.

Wie aus Vorgesagtem klar wird, kann die Kombination aus Wiederzuschalten der Energieversorgung eines Verstellantriebs aus einem Energiespeicher, während ein Sonderbetriebs-, insbesondere Störfall noch andauert, mit einem Verstellen des Rotorblatts in Richtung einer Sollstellung, falls eine Abweichung des Rotorblatts von einer Sollstellung trotz geschlossener Pitch-Bremse einen vorgegebenen Grenzwert überschreitet, besonders vorteilhaft sein. Die vorliegende Erfindung ist jedoch nicht auf diese Kombination beschränkt, sondern kann in einer Ausführung auch nur den Aspekt des Wiederzuschaltens oder nur den Aspekt des Verstellens bei Überschreiten des Abweichungs-Grenzwerts realisieren.

In einer Ausführung weist die Windenergieanlage bzw. ihre Mittel, insbesondere Steuerung, auf: Mittel zum Wiederzuschalten der Energieversorgung des Verstellantriebs aus dem Energiespeicher auf Basis wenigstens eines reaktivierenden Aktivierungssignals zum Verstellen des Rotorblatts und Verstellen des Rotorblatts mithilfe dieser Energieversorgung des Verstellantriebs in einem Reaktivierungs-Verstellbetriebsmodus, während der Sonderbetriebs-, insbesondere Störfall noch andauert; und/oder
wenigstens eine, insbesondere wenigstens zwei, Schnittstelle(n), insbesondere am Rotor, zum Auslösen eines reaktivierenden Aktivierungssignals durch manuelle Eingabe; und/oder Mittel zum Auslösen eines reaktivierenden Aktivierungssignals, falls erfasst wird, dass eine Drehzahl oder Last des Rotors einen vorgegebenen Grenzwert überschreitet, insbesondere Mittel zum Erfassen, dass eine Drehzahl oder Last des Rotors einen vorgegebenen Grenzwert überschreitet; und/oder
Mittel zum wenigstens zeitweisen Öffnen der Pitch-Bremse während des Reaktivierungs-Verstellbetriebsmodus ist; und/oder
Mittel zum Verstellen des Rotorblatts in dem Reaktivierungs-Verstellbetriebsmodus in eine vorgegebene Sollstellung oder um einen vorgegebenen Betrag verstellt wird; und/oder Mittel zum Auslösen eines abweichungsabhängigen Aktivierungssignals, falls eine Abweichung des Rotorblatts von einer Sollstellung, insbesondere der Abschaltstellung oder einer von der Abschaltstellung verschiedenen vorgegebenen Sollstellung, einen vorgegebenen Grenzwert überschreitet, und Verstellen des Rotorblatts auf Basis des abweichungsabhängigen Aktivierungssignals in einem Bremsunterstützungs-Verstellbetriebsmodus, während der Sonderbetriebs-, insbesondere Störfall noch andauert, wobei das Rotorblatt in dem Bremsunterstützungs-Verstellbetriebsmodus in Richtung der Sollstellung verstellt wird,
insbesondere Mittel zum Anfahren der Sollstellung auf dem kürzeren von wenigstens zwei möglichen Verstellwegen und/oder wenigstens zeitweisen Öffnen der Pitch-Bremse während des Bremsunterstützungs-Verstellbetriebsmodus und/oder Wieder-Zuschalten der Energieversorgung des Verstellantriebs aus dem Energiespeicher zum Verstellen des Rotorblatts auf Basis des abweichungsabhängiges Aktivierungssignals und Verstellen des Rotorblatts mithilfe dieser Energieversorgung des Verstellantriebs in dem Bremsunterstützungs-Verstellbetriebsmodus, während der Sonderbetriebs-, insbesondere Störfall noch andauert.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Windenergieanlage betreiben kann.

Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch die Windenergieanlage, insbesondere ihre Steuerung bzw. ihre Mittel.

Ein Steuern umfasst in einer Ausführung ein Regeln.

In einer Ausführung ist der Sonderbetriebs- bzw. Störfall ein Netzausfall oder ein Störfall, insbesondere Defekt der Windenergieanlage, bei einem, insbesondere während eines, Netzausfall(s), und/oder ist, insbesondere wird, in dem Sonderbetriebs- bzw. Störfall der Verstellantrieb von einer Energiequelle, in einer Ausführung einem (Strom)Netz oder einer Hydraulikquelle bzw. -versorgung bzw. einem Hydrauliksystem bzw. -netz, aus der er in einem Normal- bzw. Regelbetrieb versorgt wird, getrennt und/oder (stattdessen) wenigstens temporär, insbesondere zum Verstellen in Richtung der Abschaltstellung, durch den Energiespeicher versorgt bzw. die Energieversorgung des Verstellantriebs von der Energiequelle auf den Energiespeicher umgeschaltet. In einer Ausführung umfasst, in einer Weiterbildung ist, die Energiequelle ein (Strom)Netz oder ein Hydrauliksystem bzw. -netz bzw. eine Hydraulik(druck)quelle bzw. -versorgung. In einer Ausführung ist eine bzw. die Fahnenstellung eine Stellung wenigstens im Wesentlichen senkrecht zu einer Ausrichtung für maximale Leistung bzw. um wenigstens 85° und/oder höchstens 95° gegenüber einer solchen (normalen) Ausrichtung verdreht.

Eine hier genannte Sollstellung ist in einer Ausführung eine bzw. die Fahnenstellung oder eine bzw. die Trudelstellung.

Weitere Vorteile und Merkmale ergeben sich aus den Unteransprüchen und den Ausführungsbeispielen. Hierzu zeigt, teilweise schematisiert:
- Fig. 1:: einen Teil einer Windenergieanlage nach einer Ausführung der vorliegenden Erfindung;
- Fig. 2:: ein Verfahren zum Betreiben der Windenergieanlage nach einer Ausführung der vorliegenden Erfindung; und
- Fig. 3:: ein Verfahren zum Betreiben der Windenergieanlage nach einer weiteren Ausführung der vorliegenden Erfindung.

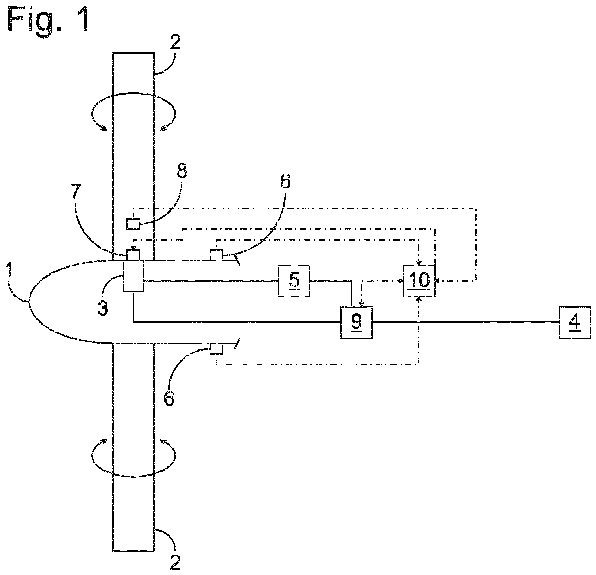

Fig. 1 zeigt einen Teil einer Windenergieanlage nach einer Ausführung der vorliegenden Erfindung.

Dabei zeigt Fig. 1 einen Teil eines Rotors bzw. einer Rotornabe 1, der drei Rotorblätter 2 aufweist, von denen in Fig. 1 zwei um 120° um eine horizontale Rotor-Drehachse versetzte Rotorblätter zu sehen sind, während das dritte, um weitere 120° versetzte Rotorblatt nicht sichtbar ist.

Die Rotorblätter sind jeweils durch einen elektromotorischen oder hydraulischen Verstellantrieb 3 um eine Drehachse (winkel)verstellbar, wie in Fig. 1 durch Bewegungs-Doppelpfeile angedeutet.

Zur kompakteren Darstellung ist nur die Aktuierung des einen der drei Rotorblätter in Fig. 1 detaillierter illustriert, wobei die Aktuierung der drei Rotorblätter in identischer Weise erfolgt, insbesondere jedes der Rotorblätter einen eigenen Verstellantrieb 3 aufweist.

Der (jeweilige) Verstellantrieb 3 ist schaltbar einerseits mit einer Energiequelle 4, beispielsweise einem (Strom)Netz oder einer Hydraulik(druck)quelle, und andererseits einem internen Energiespeicher 5, beispielsweise einem oder mehreren Akkumulatoren oder einem ein- oder mehrkammerigen, in einer Ausführung hydropneumatischen, (Druck(energie))Speicher verbunden.

Zudem sind in Fig. 1 zwei Schnittstellen am Rotor in Form von Tastern 6, die auf einander gegenüberliegenden Seiten des Rotors angeordnet sind, eine Pitch-Bremse 7 zum Halten des jeweiligen Rotorblatts 2 und exemplarisch ein Sensor 8 zum Erfassen einer Winkelstellung oder Last des Rotorblattes oder einer Drehzahl oder Last des Rotors angedeutet. Wie erwähnt, sind identische Pitch-Bremsen für die anderen beiden Rotorblätter sowie gegebenenfalls weitere Sensoren zum Erfassen von ihrer Rotorblattstellungen und/oder -lasten vorgesehen und zur kompakteren Darstellung in Fig. 1 ausgeblendet.

Eine Steuerung ist mit 10 bezeichnet.

In Fig. 1 ist zudem angedeutet, dass der Energiespeicher 5 den Verstellantrieb 3 sowohl direkt als auch indirekt, beispielsweise über einen Zwischenkreis bzw. Umrichter 9, mit Energie versorgen kann.

In einem Schritt S10 erfasst die Steuerung einen Sonderbetriebs-, insbesondere Störfall, im Ausführungsbeispiel einen Netzausfall.

In einem Schritt S20 verstellt sie daraufhin die Rotorblätter 2 mithilfe der von dem bzw. den Energiespeichern 5 energieversorgten Verstellantriebe 3 in eine Abschaltstellung, im Ausführungsbeispiel eine Trudelstellung, die von einer Fahnenstellung um etwa 5° verschieden sind, so dass der Rotor bei normalem Wind weiter langsam dreht.

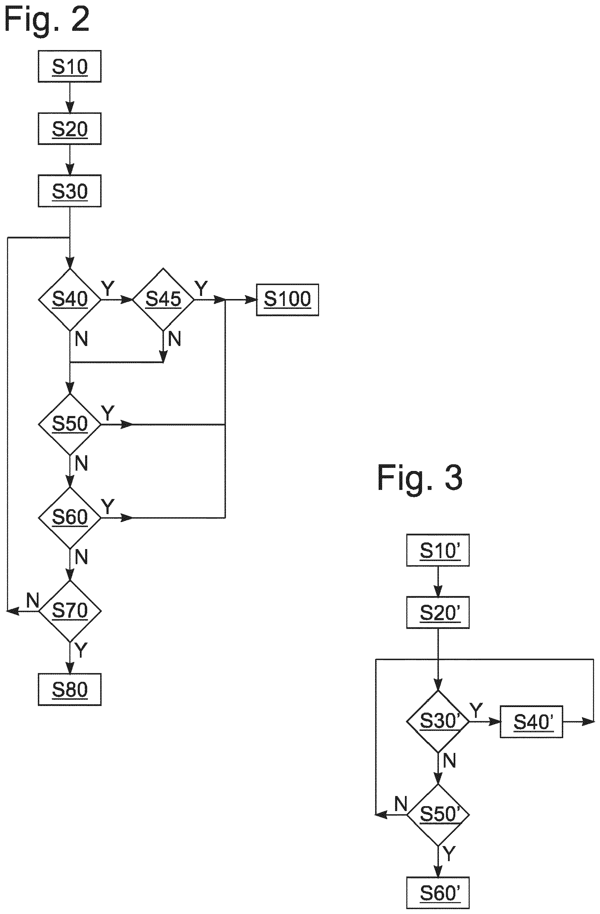

Bei Erreichen der Trudelstellung wird diese Energieversorgung des jeweiligen Verstellantriebs 3 abgeschaltet, beispielsweise automatisch durch einen Schütz (nicht dargestellt), und die jeweilige Pitch-Bremse 7 geschlossen (Fig. 2: Schritt S30).

Falls einer der Taster 6 einmal betätigt wird (S 40: "Y"), wird in einen Bereitschaftsmodus umgeschaltet. Wird in diesem einer der Taster 6 erneut betätigt (S 45: "Y"), wird ein reaktivierendes Aktivierungssignal ausgelöst und daraufhin die Energieversorgung der Verstellantriebe 3 aus dem bzw. den Energiespeichern 5 wieder zugeschaltet, beispielsweise durch Übersteuern des Schützes, und die Verstellantriebe 3 verstellen die Rotorblätter 2 aus der Trudel- in ihre Fahnenstellung, während der Netzausfall immer noch andauert (Fig. 2: Schritt S100).

Wird der Taster 6 nicht (S 40: "N") bzw. im Bereitschaftsmodus nicht erneut betätigt (S 45: "N"), fährt das Verfahren mit Schritt S50 fort, in dem anhand der Signale des bzw. der Sensoren 8 geprüft wird, ob die Drehzahl des Rotors 1 bzw. die Last auf die Rotorblätter einen vorgegebenen Grenzwert übersteigt.

Ist dies der Fall (S 50: "Y"), wird analog ein reaktivierendes Aktivierungssignal ausgelöst und daraufhin die Energieversorgung der Verstellantriebe 3 aus dem bzw. den Energiespeichern 5 wieder zugeschaltet und die Verstellantriebe 3 verstellen die Rotorblätter 2 aus der Trudel- in ihre Fahnenstellung, während der Netzausfall immer noch andauert (Fig. 2: Schritt S100).

Ist dies nicht der Fall (S 50: "N"), wird in einem Schritt S60 anhand der Signale des bzw. der Sensoren 8 geprüft, ob eine Abweichung eines der Rotorblätter von seiner Sollstellung (Trudel- oder Fahnenstellung) einen vorgegebenen Grenzwert überschreitet.

Ist dies der Fall (S 60: "Y"), wird ein abweichungsabhängiges Aktivierungssignals ausgelöst und daraufhin die Energieversorgung des entsprechenden Verstellantriebs 3 aus dem Energiespeichern 5 wieder zugeschaltet und dieser Verstellantrieb 3 verstellt dieses Rotorblatt 2 in seine Sollstellung, während der Netzausfall immer noch andauert (Fig. 2: Schritt S100).

In einem Schritt S80 wird bei Beendigung des Netzausfalls (S 70: "Y") der reguläre Betrieb wieder aufgenommen.

In einer in Fig. 3 gezeigten Ausführung ist nur ein Bremsunterstützungs-Verstellbetriebsmodus vorgesehen:
In einem Schritt S10` erfasst die Steuerung einen Sonderbetriebsfall, beispielsweise eine gewünschte Stillsetzung der Windenergieanlage.

In einem Schritt S20' verstellt sie daraufhin die Rotorblätter 2 mithilfe der von der Energiequelle 4 energieversorgten Verstellantriebe 3 in eine Abschaltstellung, in diesem Ausführungsbeispiel eine Fahnenstellung, und die jeweilige Pitch-Bremse 7 wird nach Erreichen der Abschaltstellung geschlossen.

In einem Schritt S30` wird geprüft, ob eine Abweichung eines der Rotorblätter von seiner Fahnenstellung einen vorgegebenen Grenzwert überschreitet.

Dies kann insbesondere dadurch der Fall sein, dass das Rotorblatt von seiner Pitch-Bremse ab- bzw. diese (durch)rutscht, da sie schwächer ausgelegt ist als die Auslegungs-Maximallast auf das Rotorblatt.

Ist dies der Fall (S 30`: "Y"), wird ein abweichungsabhängiges Aktivierungssignals ausgelöst und daraufhin verstellt der zugehörige Verstellantrieb 3 dieses Rotorblatt 2 auf kürzestem Weg zurück in seine Fahnenstellung, während immer noch der Sonderbetriebsfall "gewünschte Stillsetzung der Windenergieanlage" andauert (Fig. 3: Schritt S40`).

In einem Schritt S60` wird bei Beendigung des Netzausfalls (S 50`: "Y") der reguläre Betrieb wieder aufgenommen.

Obwohl in der vorhergehenden Beschreibung exemplarische Ausführungen erläutert wurden, sei darauf hingewiesen, dass eine Vielzahl von Abwandlungen möglich ist.

So kann insbesondere im Ausführungsbeispiel der Fig. 2 eine oder mehrerer der Verzweigungen (S40, S45), S50 oder S60 entfallen oder durch die Taster (S40, S45), Sensoren (S50) und/oder rutschenden Pitch-Bremsen (S60) unterschiedliche Verstellbetriebsmodi ausgelöst werden. Zusätzlich oder alternativ kann der Sonderbetriebsfall beispielsweise auch ein Störfall während eines Netzausfalls sein, wobei zunächst infolge des Netzausfalls mittels Energiespeicher und Umrichter verfahren wird und während des Netzausfalls der Störfall auftritt, dass der Umrichter defekt ist, so dass nun über direktes Aufschalten des Energiespeichers auf den Verstellantrieb bis in die Trudelstellung verfahren wird.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Rotor(nabe)
- 2: Rotorblatt
- 3: Verstellantrieb
- 4: Netz/Hydraulik(druck)quelle (Energiequelle)
- 5: Akkumulator/Druckspeicher (Energiespeicher)
- 6: Taster (Schnittstelle)
- 7: Pitch-Bremse
- 8: Sensor(en) (Winkelstellung/Last/Drehzahl)
- 9: Umrichter/Zwischenkreis
- 10: Steuerung

## Patentansprüche

1. Verfahren zum Betreiben einer Windenergieanlage, insbesondere nach einem der Ansprüche 13 bis 14, welche einen Rotor (1) mit wenigstens einem winkelverstellbaren Rotorblatt (2) und einen Verstellantrieb (3) zum Verstellen des Rotorblatts aufweist, wobei:
- das Rotorblatt bei Auftritt wenigstens eines Sonderbetriebs-, insbesondere Störfalls mithilfe des Verstellantriebs in Richtung einer Abschaltstellung verstellt wird (S20; S20`);
wobei in der Abschaltstellung
- eine Energieversorgung des Verstellantriebs aus einem Energiespeicher (5) zum Verstellen des Rotorblatts in Richtung der Abschaltstellung abgeschaltet ist; und/oder
- eine Pitch-Bremse (7) zum Halten des Rotorblatts in seiner aktuellen Stellung geschlossen ist;
wobei auf Basis wenigstens eines Aktivierungssignals
- das Rotorblatt mithilfe des Verstellantriebs in einem Verstellbetriebsmodus verstellt wird, während der Sonderbetriebs-, insbesondere Störfall noch andauert (S100; S40`).

2. Verfahren nach Anspruch 1, **dadurch gekennzeichnet, dass** auf Basis wenigstens eines reaktivierenden Aktivierungssignals die Energieversorgung des Verstellantriebs aus dem Energiespeicher zum Verstellen des Rotorblatts wieder zugeschaltet und das Rotorblatt mithilfe dieser Energieversorgung des Verstellantriebs in einem Reaktivierungs-Verstellbetriebsmodus verstellt wird, während der Sonderbetriebs-, insbesondere Störfall noch andauert.

3. Verfahren nach Anspruch 2, **dadurch gekennzeichnet, dass** ein reaktivierendes Aktivierungssignal durch manuelle Eingabe über wenigstens eine Schnittstelle (6), insbesondere am Rotor, auslösbar ist.

4. Verfahren nach Anspruch 3, **dadurch gekennzeichnet, dass** die Auslösung dieses reaktivierende Aktivierungssignal wenigstens zwei manuelle Eingaben erfordert und/oder über wenigstens zwei Schnittstellen (6) möglich ist.

5. Verfahren nach einem der Ansprüche 2 bis 4, **dadurch gekennzeichnet, dass** ein reaktivierendes Aktivierungssignal ausgelöst wird, falls erfasst wird, dass eine Drehzahl oder Last des Rotors einen vorgegebenen Grenzwert überschreitet.

6. Verfahren nach einem der Ansprüche 2 bis 5, **dadurch gekennzeichnet, dass** die Pitch-Bremse während des Reaktivierungs-Verstellbetriebsmodus wenigstens zeitweise geöffnet ist.

7. Verfahren nach einem der Ansprüche 2 bis 6; **dadurch gekennzeichnet, dass** das Rotorblatt in dem Reaktivierungs-Verstellbetriebsmodus in eine vorgegebene Sollstellung oder um einen vorgegebenen Betrag verstellt wird.

8. Verfahren nach einem der vorhergehenden Ansprüche, **dadurch gekennzeichnet, dass** ein abweichungsabhängiges Aktivierungssignal ausgelöst wird, falls eine Abweichung des Rotorblatts von einer Sollstellung, insbesondere der Abschaltstellung oder einer von der Abschaltstellung verschiedenen vorgegebenen Sollstellung, einen vorgegebenen Grenzwert überschreitet, und auf Basis des abweichungsabhängigen Aktivierungssignals das Rotorblatt in einem Bremsunterstützungs-Verstellbetriebsmodus verstellt wird, während der Sonderbetriebs-, insbesondere Störfall noch andauert, wobei das Rotorblatt in dem Bremsunterstützungs-Verstellbetriebsmodus in Richtung der Sollstellung verstellt wird.

9. Verfahren nach Anspruch 8, **dadurch gekennzeichnet, dass** das Rotorblatt in dem Bremsunterstützungs-Verstellbetriebsmodus die Sollstellung auf dem kürzeren von wenigstens zwei möglichen Verstellwegen anfährt; und/oder dass die Pitch-Bremse während des Bremsunterstützungs-Verstellbetriebsmodus wenigstens zeitweise geöffnet ist; und/oder dass auf Basis des abweichungsabhängiges Aktivierungssignals die Energieversorgung des Verstellantriebs aus dem Energiespeicher zum Verstellen des Rotorblatts wieder zugeschaltet und das Rotorblatt mithilfe dieser Energieversorgung des Verstellantriebs in dem Bremsunterstützungs-Verstellbetriebsmodus verstellt wird, während der Sonderbetriebs-, insbesondere Störfall noch andauert.

10. Verfahren nach einem der vorhergehenden Ansprüche, **dadurch gekennzeichnet, dass** der Sonderbetriebs-, insbesondere Störfall einen Netzausfall umfasst.

11. Verfahren nach einem der vorhergehenden Ansprüche, **dadurch gekennzeichnet, dass** der Verstellantrieb das Rotorblatt elektromotorisch verstellt und der Energiespeicher einen elektrischen Energiespeicher umfasst oder dass der Verstellantrieb das Rotorblatt hydraulisch verstellt und der Energiespeicher einen Druckspeicher umfasst.

12. Verfahren nach einem der vorhergehenden Ansprüche, **dadurch gekennzeichnet, dass** das Rotorblatt mithilfe des Verstellantriebs in dem Verstellbetriebsmodus durch eine sichere, insbesondere redundante, Steuerung (10) verstellt wird.

13. Windenergieanlage mit einem Rotor (1) mit wenigstens einem winkelverstellbaren Rotorblatt (2) und einem Verstellantrieb (3) zum Verstellen des Rotorblatts, wobei die Windenergieanlage zur Durchführung eines Verfahrens nach einem der vorhergehenden Ansprüche eingerichtet ist und/oder aufweist:
Mittel zum Verstellen des Rotorblatts bei Auftritt wenigstens eines Sonderbetriebs-, insbesondere Störfalls mithilfe des Verstellantriebs in Richtung einer Abschaltstellung;
Mittel zum Abschalten einer Energieversorgung des Verstellantriebs aus einem Energiespeicher (5) der Windenergieanlage zum Verstellen des Rotorblatts in Richtung der Abschaltstellung und/oder Schließen einer Pitch-Bremse (7) der Windenergieanlage zum Halten des Rotorblatts in seiner aktuellen Stellung in der Abschaltstellung; und
Mittel zum Verstellen des Rotorblatts mithilfe des Verstellantriebs in einem Verstellbetriebsmodus auf Basis wenigstens eines Aktivierungssignals, während der Sonderbetriebs-, insbesondere Störfall noch andauert.

14. Windenergieanlage nach Anspruch 13, **dadurch gekennzeichnet, dass** die Pitch-Bremse planmäßig bei einer auf das Rotorblatt wirkenden Last rutscht, welche geringer als eine in der Abschaltstellung auf das Rotorblatt wirkenden Maximallast ist, für die die Windenergieanlage ausgelegt ist.

15. Computerprogrammprodukt mit einem Programmcode, der auf einem von einem Computer lesbaren Medium gespeichert ist, zur Durchführung eines Verfahrens nach einem der vorhergehenden Ansprüche.

## Claims

1. A method of operating a wind energy installation, in particular as claimed in any one of the claims 13 to 14, which wind energy installation has a rotor (1) with at least one rotor blade (2) which can be adjusted in terms of its angle, and an adjustment drive (3) for adjusting the rotor blade, wherein:
- in the event that at least one case of special operation should occur, in particular in the event that at least one case of malfunction should occur, the rotor blade is adjusted in a direction of a shutdown position with the aid of the adjustment drive (S 20; S 20');
wherein, in the shutdown position
- a supply of energy from an energy storage device (5) to the adjustment drive for adjusting the rotor blade in the direction of the shutdown position is switched off; and / or
- a pitch brake (7) for holding the rotor blade in its current position is closed;
wherein, on the basis of at least one activation signal
- the rotor blade is adjusted with the aid of the adjustment drive in an adjustment mode of operation while the case of special operation is still ongoing, in particular while the case of malfunction is still ongoing (S 100; S 40').

2. The method as claimed in claim 1, **characterised in that**, on the basis of at least one reactivating activation signal, the supply of energy of the adjustment drive from the energy storage device for adjusting the rotor blade is switched on again and the rotor blade is adjusted with the aid of this supply of energy of the adjustment drive in a reactivation adjustment mode of operation while the case of special operation is still ongoing, in particular while the case of malfunction is still ongoing.

3. The method as claimed in claim 2, **characterised in that** a reactivating activation signal can be triggered by a manual input via at least one interface (6), in particular on the rotor.

4. The method as claimed in claim 3, **characterised in that** the triggering of this reactivating activation signal requires at least two manual inputs and / or that it is possible via at least two interfaces (6).

5. The method as claimed in any one of the claims 2 to 4, **characterised in that** a reactivating activation signal is triggered if it is detected that a rotational speed of the rotor or a load on the rotor exceeds a predetermined threshold value.

6. The method as claimed in any one of the claims 2 to 5, **characterised in that** the pitch brake is opened, at least temporarily, during the reactivation adjustment mode of operation.

7. The method as claimed in any one of the claims 2 to 6; **characterised in that** the rotor blade is adjusted to a predetermined target position or by a predetermined amount in the reactivation adjustment mode of operation.

8. The method as claimed in any one of the preceding claims, **characterised in that** an activation signal which is deviation-dependent is triggered if a deviation of the rotor blade from a target position, in particular from the shutdown position or from a predetermined target position which is different from the shutdown position, exceeds a predetermined threshold value, and on the basis of the activation signal which is deviation-dependent, the rotor blade is adjusted in a brake assisting adjustment mode of operation while the case of special operation is still ongoing, in particular while the case of malfunction is still ongoing, wherein, in the brake assisting adjustment mode of operation, the rotor blade is adjusted in the direction of the target position.

9. The method as claimed in claim 8, **characterised in that** the rotor blade moves to the target position on the shorter of at least two possible adjustment paths in the brake assisting adjustment mode of operation; and / or **in that** the pitch brake is opened, at least temporarily, during the brake assisting adjustment mode of operation; and / or **in that**, on the basis of the activation signal which is deviation-dependent, the supply of energy to the adjustment drive from the energy storage device for adjusting the rotor blade is reconnected, and the rotor blade is adjusted with the aid of this supply of energy of the adjustment drive in the brake assisting adjustment mode of operation while the case of special operation is still ongoing, in particular while the case of malfunction is still ongoing.

10. The method as claimed in any one of the preceding claims, **characterised in that** the case of special operation comprises a power failure, in particular **in that** the case of malfunction comprises a power failure.

11. The method as claimed in any one of the preceding claims, **characterised in that** the adjustment drive adjusts the rotor blade in an electromotive manner, and **in that** the energy storage device comprises an electrical energy storage device, or **in that** the adjustment drive adjusts the rotor blade in a hydraulic manner, and **in that** the energy storage device comprises a pressure accumulator.

12. The method as claimed in any one of the preceding claims, **characterised in that** the rotor blade is adjusted with the aid of the adjustment drive in the adjustment mode of operation by a safe control device / system (10), in particular by a redundant safe control device / system (10).

13. A wind energy installation which has a rotor (1) with at least one rotor blade (2) which can be adjusted in terms of its angle, and an adjustment drive (3) for adjusting the rotor blade, wherein the wind energy installation is set up for carrying out a method as claimed in any one of the preceding claims, and / or which comprises:
means for adjusting the rotor blade in the direction of a shutdown position with the aid of the adjustment drive in the event that at least one case of special operation should occur, in particular in the event that at least one case of malfunction should occur;
means for switching off a supply of energy to the adjustment drive from an energy storage device (5) of the wind energy installation for adjusting the rotor blade in the direction of the shutdown position and / or for closing a pitch brake (7) of the wind energy installation in order to hold the rotor blade in its current position in the shutdown position; and
means for adjusting the rotor blade with the aid of the adjustment drive in an adjustment mode of operation on the basis of at least one activation signal while the case of special operation is still ongoing, in particular while the case of malfunction is still ongoing.

14. The wind energy installation as claimed in claim 13, **characterised in that** the pitch brake slips, according to plan, at a load acting on the rotor blade which is smaller than a maximum load which acts on the rotor blade in the shutdown position and for which the wind energy installation is constructed.

15. A computer program product comprising a program code which is stored on a computer readable medium, for carrying out a method as claimed in any one of the preceding claims.

## Revendications

1. Procédé pour faire fonctionner une éolienne en particulier selon l'une quelconque des revendications 13 à 14, laquelle présente un rotor (1) avec au moins une pale de rotor (2) à angle ajustable et un entraînement d'ajustement (3) destiné à ajuster la pale de rotor, dans lequel :
- la pale de rotor est ajustée (S20 ; S20') en direction d'une position de désactivation à l'aide de l'entraînement d'ajustement lors de l'apparition d'au moins un cas de fonctionnement spécifique, en particulier d'une défaillance,
dans lequel
- une alimentation en énergie de l'entraînement d'ajustement provenant d'un accumulateur d'énergie (5) est désactivée pour ajuster la pale de rotor en direction de la position de désactivation ; et/ou
- un frein de pas (7) est fermé pour maintenir la pale de rotor dans sa position instantanée
dans la position de désactivation ;
dans lequel
- la pale de rotor est ajustée dans un mode de fonctionnement d'ajustement à l'aide de l'entraînement d'ajustement, tandis que le cas de fonctionnement spécifique, en particulier la défaillance, dure encore (S100 ; S40')
sur la base d'au moins un signal d'activation.

2. Procédé selon la revendication 1, **caractérisé en ce que** l'alimentation en énergie de l'entraînement d'ajustement provenant de l'accumulateur d'énergie est à nouveau activée pour ajuster la pale de rotor et la pale de rotor est ajustée dans un mode de fonctionnement d'ajustement de réactivation à l'aide de ladite alimentation en énergie de l'entraînement d'ajustement, tandis que le mode de fonctionnement spécifique, en particulier la défaillance, dure encore, sur la base d'au moins un signal d'activation de réactivation.

3. Procédé selon la revendication 2, **caractérisé en ce qu'**un signal d'activation de réactivation peut être déclenché par une saisie manuelle par l'intermédiaire d'au moins une interface (6), en particulier sur le rotor.

4. Procédé selon la revendication 3, **caractérisé en ce que** le déclenchement dudit signal d'activation de réactivation requiert au moins deux saisies manuelles et/ou est possible par l'intermédiaire d'au moins deux interfaces (6).

5. Procédé selon l'une quelconque des revendications 2 à 4, **caractérisé en ce qu'**un signal d'activation de réactivation est déclenché s'il est détecté qu'une vitesse de rotation ou une charge du rotor dépasse une valeur limite prédéfinie.

6. Procédé selon l'une quelconque des revendications 2 à 5, **caractérisé en ce que** le frein de pas est ouvert au moins par intermittence pendant le mode de fonctionnement d'ajustement de réactivation.

7. Procédé selon l'une quelconque des revendications 2 à 6 ; **caractérisé en ce que** la pale de rotor est ajustée dans une position théorique prédéfinie ou d'une valeur prédéfinie dans le mode de fonctionnement d'ajustement de réactivation.

8. Procédé selon l'une quelconque des revendications précédentes, **caractérisé en ce qu'**un signal d'activation dépendant d'un écart est déclenché si un écart de la pale de rotor par rapport à une position théorique, en particulier la position de désactivation ou une position théorique prédéfinie différente de la position de désactivation, dépasse une valeur limite prédéfinie, et la pale de rotor est ajustée dans un mode de fonctionnement d'ajustement d'assistance au freinage sur la base du signal d'activation dépendant de l'écart, pendant que le cas de fonctionnement spécifique, en particulier la défaillance dure encore, dans lequel la pale de rotor est ajustée en direction de la position théorique dans le mode de fonctionnement d'ajustement d'assistance au freinage.

9. Procédé selon la revendication 8, **caractérisé en ce que** la pale de rotor approche dans le mode de fonctionnement d'ajustement d'assistance au freinage la position théorique sur le trajet d'ajustement le plus court d'au moins deux trajets d'ajustement possibles ; et/ou que le frein de pas est ouvert au moins par intermittence pendant le mode de fonctionnement d'ajustement d'assistance au freinage ; et/ou que l'alimentation en énergie de l'entraînement d'ajustement provenant de l'accumulateur d'énergie est à nouveau activée pour ajuster la pale de rotor sur la base du signal d'activation dépendant de l'écart et la pale de rotor est ajustée dans le mode de fonctionnement d'ajustement d'assistance au freinage à l'aide de ladite alimentation en énergie de l'entraînement d'ajustement, tandis que le mode de fonctionnement spécifique, en particulier la défaillance, dure encore.

10. Procédé selon l'une quelconque des revendications précédentes, **caractérisé en ce que** le mode de fonctionnement spécifique, en particulier la défaillance, comprend une panne de secteur.

11. Procédé selon l'une quelconque des revendications précédentes, **caractérisé en ce que** l'entraînement d'ajustement ajuste la pale de rotor de manière électromotorisée et l'accumulateur d'énergie comprend un accumulateur d'énergie électrique, ou que l'entraînement d'ajustement ajuste de manière hydraulique la pale de rotor et l'accumulateur d'énergie comprend un accumulateur de pression.

12. Procédé selon l'une quelconque des revendications précédentes, **caractérisé en ce que** la pale de rotor est ajustée par une commande (10) fiable, en particulier redondante, dans le mode de fonctionnement d'ajustement à l'aide de l'entraînement d'ajustement.

13. Éolienne avec un rotor (1) avec au moins une pale de rotor (2) à angle d'ajustable et un entraînement d'ajustement (3) destiné à ajuster la pale de rotor, dans laquelle l'éolienne est mise au point pour mettre en œuvre un procédé selon l'une quelconque des revendications précédentes et/ou présente :
des moyens destinés à ajuster la pale de rotor lors de l'apparition d'au moins un cas de fonctionnement spécifique, en particulier d'une défaillance, à l'aide de l'entraînement d'ajustement en direction d'une position de désactivation ;
des moyens destinés à désactiver une alimentation en énergie de l'entraînement d'ajustement depuis un accumulateur d'énergie (5) de l'éolienne pour ajuster la pale de rotor en direction de la position de désactivation et/ou à fermer un frein de pas (7) de l'éolienne pour maintenir la pale de rotor dans sa position instantanée dans la position de désactivation ; et
des moyens destinés à ajuster la pale de rotor à l'aide de l'entraînement d'ajustement dans un mode de fonctionnement d'ajustement sur la base d'au moins un signal d'activation, tandis que le mode de fonctionnement spécifique, en particulier la défaillance, dure encore.

14. Éolienne selon la revendication 13, **caractérisée en ce que** le frein de pas glisse selon les prévisions à une charge agissant sur la pale de rotor, laquelle est inférieure à une charge maximale agissant sur la pale de rotor dans la position de désactivation, pour laquelle l'éolienne est conçue.

15. Produit-programme d'ordinateur avec un code de programme, qui est stocké sur un support lisible par ordinateur, destiné à mettre en œuvre un procédé selon l'une quelconque des revendications précédentes.
